# EUROPÄISCHE PATENTANMELDUNG

(11) **EP 4 472 038 A1**
(43) Veröffentlichungstag der Anmeldung: **04.12.2024**
(21) Anmeldenummer: 23176633.8
(22) Anmeldetag: 01.06.2023
(51) Int. Cl.: H02K 5/02, H02K 5/20, H02K 7/00

(54) **INAKTIVTEIL EINER DYNAMOELEKTRISCHEN MASCHINE**

(71) Anmelder: Siemens Aktiengesellschaft, 80333 München (DE)
(72) Erfinder: Seufert, Reiner, 97616 Salz (DE); Vollmer, Rolf, 36129 Gersfeld (DE)
(74) Vertreter: Siemens Patent Attorneys

(57) **Zusammenfassung**

Die Erfindung betrifft ein Inaktivteil (100) einer dynamoelektrischen Maschine, aufweisend technische Keramik (101). Die Erfindung betrifft ferner ein Verfahren zur Herstellung des Inaktivteils (100) sowie Verwendungen.

## Beschreibung

Die Erfindung betrifft ein Inaktivteil einer dynamoelektrischen Maschine.

Ein Einsatz von Materialien in Elektromotoren, die nachhaltig und versorgungssicher sind, wird immer wichtiger. Zusätzlich sollen auch die technischen Eigenschaften der Motoren verbessert werden.

Bisher werden bei den Inaktivteilen von Elektromotoren, wie z.B. Wellen, Lagerschilde und Gehäuse, meistens Metalle verwendet. Die Metalle sind derzeit beispielsweise Aluminiumlegierungen oder auch Eisenlegierungen (aufweisend Stahl). Diese Metalle werden oftmals durch Reduktionsverfahren aus Erzen gewonnen, die sehr energieintensiv sind.

Bauteile aus Metall benötigen meist ein Mindestvolumen, um die Anforderungen an Festigkeit und Steifigkeit zu erfüllen. Über die Dichte der Metalle ergeben sich dann die Massen der Bauteile.

Bisher wurden die Inaktivteile von Elektromotoren aus Metall gefertigt, da die CO₂-Bilanz der eingesetzten Materialien weniger wichtig war.

Der Erfindung liegt die Aufgabe zugrunde, dies zu verbessern und nachhaltige Elektromotoren zu schaffen.

Die Lösung der Aufgabe gelingt durch Anspruch 1, d. h. ein Inaktivteil einer dynamoelektrischen Maschine, aufweisend technische Keramik.

Aktivteile sind insbesondere Spulen bzw. Wicklungen, Statoren und Rotoren, die der Drehmomenterzeugung dienen.

Inaktivteile sind weitere Teile der dynamoelektrischen Maschine, insbesondere der dynamoelektrischen rotatorischen Maschine, die nicht der Drehmomenterzeugung dienen. Ein Inaktivteil ist beispielsweise ein Lagerschild, eine Welle, ein Gehäuse, ein Kühlkanal, etc.

Vorteilhaft weist das Inaktivteil SiC (Siliziumcarbid) und/oder SiSiC (mit Silizium infiltriertes SiC) auf.

SiC-Keramik hat viele Vorteile: Sie weist z. B. eine geringe Dichte von ca. 3,2 g/cm³ auf (vgl. Stahl mit ca. 7,8 g/cm³). Sie weist zudem ein hohes E-Modul von 395 GPa auf (vgl. Stahl: 210 GPa). Zudem weist sie eine hohe Wärmeleitfähigkeit auf (zwischen 150 und 300 W/(m*K)). Aluminium liegt beispielsweise im Bereich von 210 W/(m*K), Stahl bei 40 W/(m*K).

Sie bzw. SiSiC ist zudem amagnetisch und zeichnet sich durch eine hohe Festigkeit und gute Bearbeitbarkeit aus.

Ferner ist Siliziumcarbid weltweit leicht verfügbar. Es kann vorteilhaft mittels SiO₂ - Sand und Kohlenstoff hergestellt werden. Es kann, vorteilhaft mittels grüner Energie, CO₂-neutral erzeugt werden. Es kann sogar in einer Fabrik zur Dekarbonisierung der Atmosphäre hergestellt werden. Sie dient somit sogar als Kohlenstoffsenke.

Eine Motorwelle, die die genannte Keramik statt Stahl aufweist bzw. sogar zur Gänze aus der genannten Keramik besteht, kann mit deutlich geringerer Masse dimensioniert werden. Das liegt vorteilhaft einerseits an der geringeren Dichte und andererseits an dem höheren E-Modul.

Durch die Möglichkeit, amagnetische Materialien einzusetzen, können magnetische Streuungen vermieden werden, was zu einer erhöhten Drehmomentbildung des Motors führt.

Ferner sorgt die nicht vorhandene magnetische Leitfähigkeit für eine Entkopplung der magnetischen Felder des Rotors von Einbauelementen im Motor (beispielsweise Bremse, Encoder, Sensoren), sowie einer reduzierten Einkopplung in die Kundenanbauten.

Rotorinaktivteile, wie z. B. Magnetträger und Tragstrukturen von Rotoren, können durch Keramik deutlich leichter werden. Die höhere Steifigkeit vom Rotor inklusive der Welle, führt zu reduziertem Schwingverhalten.

In einer besonderen Ausführungsform werden die Welle und das Rotorinaktivteil einteilig hergestellt. Das Rotorinaktivteil trägt insbesondere Magnete und ersetzt vorteilhaft ein Blechpaket.

Inaktivteile des Stators mit oder aus SiC bzw. SiSiC führen zu geringerer Masse, verbesserter Entwärmung durch die hohe thermische Leitfähigkeit und verbessertem Korrosionsverhalten, wodurch in einer besonderen Ausführungsform auf eine Motorlackierung verzichten kann.

Die Herstellung von Bauteilen aus SiC bzw. SiSiC führt zu deutlicher Gewichtsreduktion und somit zu einer Verbesserung des ökologischen Fußabdrucks, insbesondere bei der Verwendung in bewegten Achsen und/oder mobilen Anwendungen.

Besonders gut eignet sich SiC bzw. SiSiC für ein Gehäuse für Elektromotoren mit Flüssigkeitskühlung. Auch andere technische Keramik kann dafür verwendet werden.

Ein derartiges Gehäuse mit Kühlkanälen, die von Kühlmittel durchflossen werden, ist vorteilhaft korrosionsunempfindlich und gut wärmeleitend.

Auch die Lagerschilde bzw. wenigstens ein Lagerschild können aus technischer Keramik hergestellt werden bzw. die technische Keramik, insbesondere zu einem Großteil, aufweisen. In diesem Fall eignen sie sich auch für die Leitung/Umlenkung der Kühlflüssigkeit.

Die Herstellung der Keramikbauteile erfolgt vorteilhaft durch ein formgebendes Verfahren aus einem Schlicker, aufweisend ein Keramikpulver und Wasser und/oder eine andere Flüssigkeit. Der Schlicker ist hierbei ein flüssiges oder breiiges bis zähflüssiges Wasser-Mineralgemisch zur Herstellung von Keramikerzeugnissen. Dieses Gemisch wird vorteilhaft in eine Gussform eingebracht.

Nach dem Trocknen können die so entstandenen Grünlinge mechanisch bearbeitet werden. Anschließend werden sie vorteilhaft in einem Ofen gesintert.

Die Kühlkanäle werden entweder bereits beim Herstellprozess der Grünlinge erzeugt, insbesondere durch die Gussform, oder sie werden im Grünling durch eine mechanische Nachbearbeitung erzeugt.

Vorzugsweise vor dem Sintern kann eine Bearbeitung des Grünlings zur Formgebung, z. B durch Zerspanung, Bohren, Fräsen und/oder Drehen, erfolgen.

Dabei können auch zwei oder mehr Einzelteile als Grünling erzeugt werden und erst im Sinterprozess zu einem monolithischen Gebilde zusammen verbunden werden.

Zur Verbindung des Gehäuses mit weiteren Bauteilen wird das Gehäuse vorteilhaft mechanisch bearbeitet bzw. bei elektrisch leitender Keramik ggf. durch Elektroerosion.

Bei Bohrungen, Oberflächen, etc. und/oder vorteilhaft dort, wo ein duktiles Verhalten benötigt wird, werden vorzugsweise Hülsen oder Beschichtungen aus Metall und/oder Kunststoff verwendet. So können beispielswiese Anschraubbohrungen mit Stahlbuchsen versehen werden.

Die Inaktivteile, die technische Keramik aufweisen, insbesondere diejenigen Elemente der Maschine, die Teil einer Kühlung sind, sind so besonders korrosionsbeständig. So können sie auch besonders gut mit anderen Materialien, die sich im Kühlkreislauf befinden, verbunden und kombiniert werden. Ebenso können auch offene Kühlkreisläufe mit aggressiveren Medien verwendet werden, z. B. Salzwasser. Dies bietet den Vorteil, dass auch eine Anwendung auf See möglich ist.

Die Bauteile haben zudem einen sehr guten Wärmeleitwert, sodass die entstandene Wärme im Motor effektiv zur Flüssigkeitskühlung transportiert wird.

Die Vermeidung mehrerer Schnittstellen, die mit Dichtungen versehen werden müssten, führt zu einer Reduzierung möglicher Verschleißstellen. Beispielsweise werden bei der Verbindung von Kühlrohren mit Umlenkkanälen und Dichtungen deren Verschleiß und Fehlermöglichkeiten vermieden.

Die Bauteile sind toxikologisch unbedenklich und damit z.B. für den Einsatz in der Lebensmittelindustrie geeignet.

Keramik hat oft einen geringeren Energiebedarf in der Herstellung als Metall. Speziell die Keramik Siliziumkarbid hat das Potential zu Decarbonisierung der Atmosphäre, wenn der Kohlenstoff zur Herstellung aus CO₂ aus der Luft gewonnen wird.

Im Folgenden wird die Erfindung anhand der in den Figuren dargestellten Ausführungsbeispiele näher beschrieben und erläutert. Es zeigen:
- FIG 1: einen Kühlmantel mit Wasseranschlüssen,
- FIG 2: mehrere Grünlinge,
- FIG 3: eine weitere Ausführungsform des Kühlmantels,
- FIG 4: ein mögliches Verfahren,
- FIG 5: verschiedene Bauteile,
- FIG 6 - 9: mögliche Verwendungen des Inaktivteils.

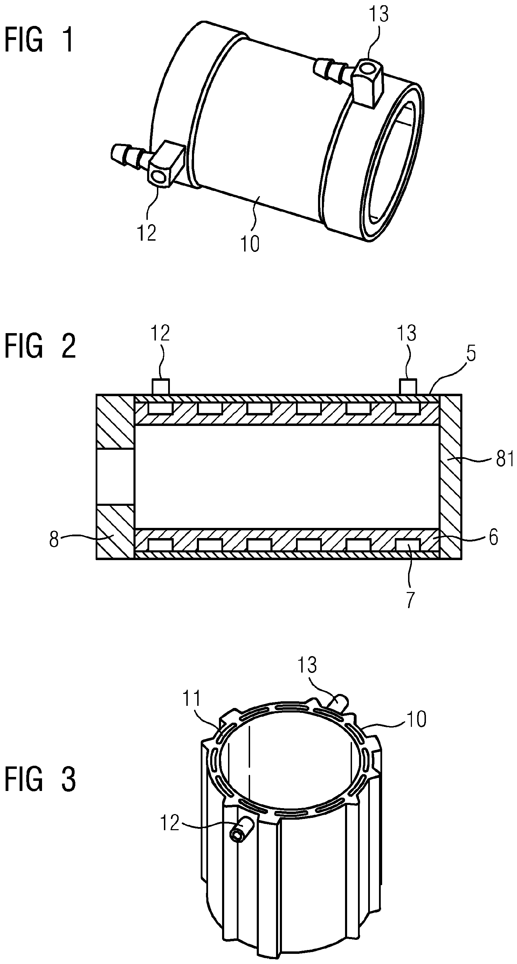

FIG 1 zeigt einen Kühlmantel mit Wasseranschlüssen 12 und 13.

FIG 3 zeigt eine weitere Ausführungsform des Kühlmantels 10 mit Kühlkanälen 11.

FIG 2 zeigt mehrere Grünlinge, die zusammen gesintert werden können. Die Grünlinge können separat gefertigt werden, beispielsweise mit Gussformen, und dann später zusammengefügt und gesintert werden.

Die Figur zeigt die Wasseranschlüsse 12 und 13 für die Kühlung. Es können auch andere Kühlmittel neben Wasser verwendet werden bzw. kann dem Wasser etwas anderes beigemischt sein.

Die Figur zeigt einen Lagerschildgrünling 8 (A-Seite), einen Lagerschildgrünling 81 (B-Seite), einen äußeren Keramikzylindergrünling 5 sowie einen inneren Keramikzylindergrünling 6 mit Kühlkanälen 7.

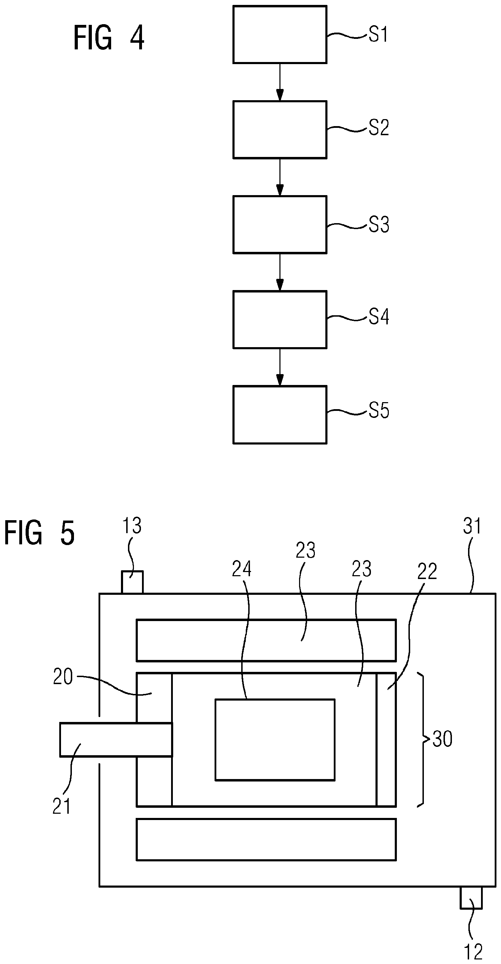

FIG 4 zeigt ein mögliches Verfahren. In einem Verfahrensschritt S1 erfolgt ein Vorbereiten des Schlickers.

In einem Verfahrensschritt S2 wird dieser in eine Gussform gefüllt und getrocknet. Der Schlicker umfasst vorteilhaft SiC und/oder SiSiC, vorzugsweise in Form eines Pulvers.

In einem Verfahrensschritt S3 erfolgt eine Nachbearbeitung, beispielsweise können Kühlkanäle eingefräst werden. Diese können jedoch auch bereits durch die Gussform berücksichtigt sein. Der Verfahrensschritt S3 ist daher optional.

In einem Verfahrensschritt S4 erfolgt ein Sintern, ggf. zusammen mit anderen Bauteilen.

In einem Verfahrensschritt S5 ist das Inaktivteil fertig gestellt.

Die Inaktivteile eines Elektromotors, also Teile des Elektromotors, die nicht der Drehmomentwandlung dienen, sind insbesondere die Motorwelle, die Tragkonstruktion des Rotors, die Lagerschilde, Gehäuse, Kühlelemente und Abdeckungen.

FIG 5 zeigt verschiedene Bauteile, die auf die beschriebene Weise hergestellt werden können bzw. die die technische Keramik aufweisen.

Die Figur zeigt eine Welle 21, ein Lagerschild 20 und ein Lagerschild 22 sowie eine Tragkonstruktion 23 eines Rotors 30. Diese sind vorteilhaft Inaktivteile.

Der Rotor 30 kann Teil einer permanenterregten Synchronmaschine sein und somit kann die inaktive Tragkonstruktion Magnete tragen. Sie kann jedoch auch als Tragkonstruktion eines Käfigläufers oder Schleifringläufers sein. Das momentbildende Element ist rein exemplarisch mit 24 gekennzeichnet.

Die Figur zeigt ferner einen Stator 25.

Auch ein Gehäuse 31 ist ein Inaktivteil und kann die technische Keramik aufweisen bzw. aus dieser gefertigt sein.

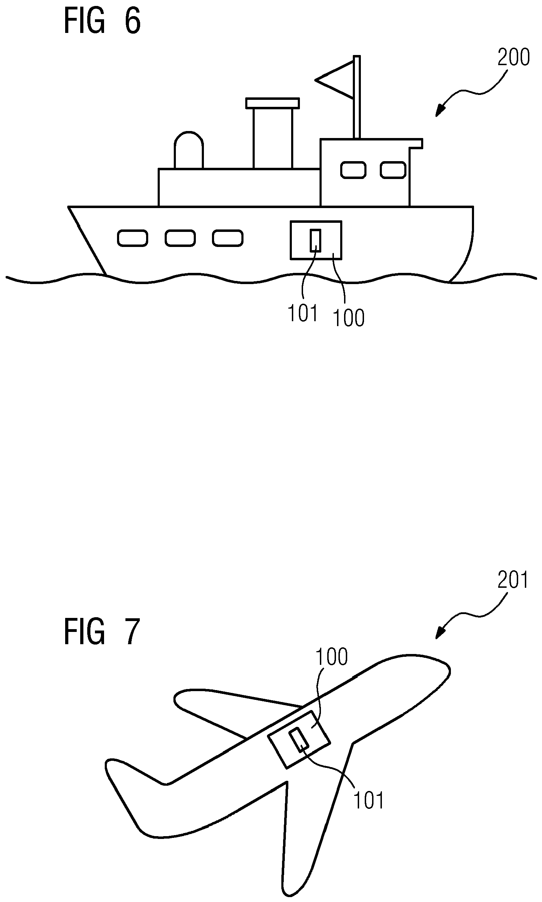

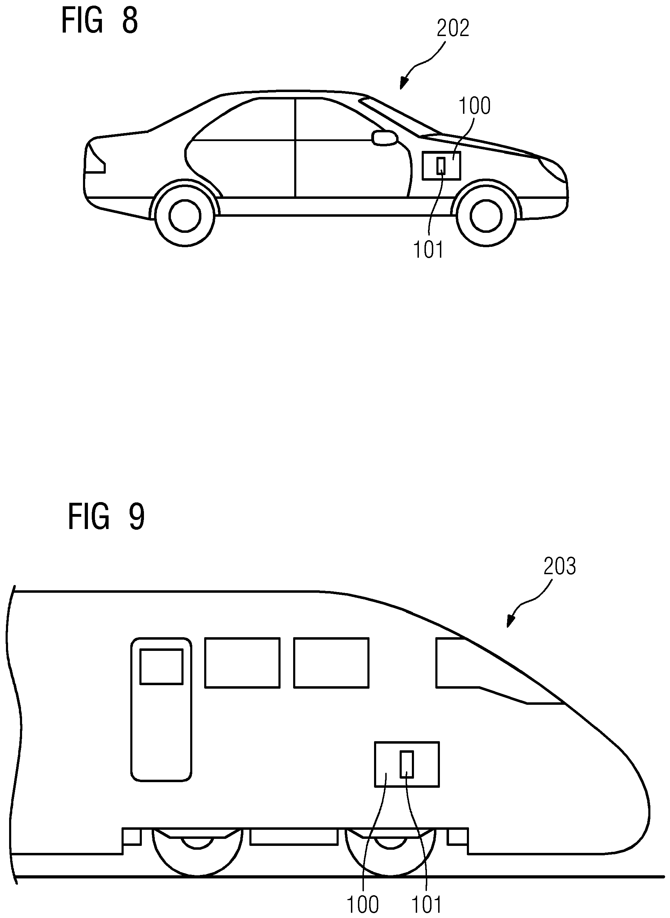

FIG 6, 7, 8 und 9 zeigen mögliche Verwendungen des Inaktivteils. Das Inaktivteil 100 weist technische Keramik 101 auf und ist für viele Anwendungen geeignet.

Die Verwendung des Inaktivteils auf See ist möglich, da das Inaktivteil beständig ggü. Salzwasser ist und dieses beispielsweise als Kühlmittel verwendet werden kann. Auch im Süßwasser kann das Inaktivteil verwendet werden. Das Inaktivteil 100 kann z. B. Teil eines Antriebs eines Wasserfahrzeugs 200 sein (z. B. Schiff oder Boot oder U-Boot).

Eine Verwendung des Inaktivteils 101 in bewegten Achsen, beispielsweise bei Landfahrzeugen, insbesondere Autos 202 und/oder Zügen 203, ist ebenso möglich. Das Inaktivteil ist hierfür gut geeignet, da es nur ein geringes Gewicht aufweist.

Eine Verwendung eines Inaktivteils in einem Luftfahrzeug 201, insbesondere Flugzeug oder Raumschiff, ist ebenso möglich, da das Inaktivteil leicht ist.

Eine Verwendung des Inaktivteils bei der Produktion von Lebensmitteln ist aufgrund der stofflichen Eigenschaften der Keramik ebenso denkbar. Zudem kann die technische Keramik gut gereinigt werden.

## Patentansprüche

1. Inaktivteil (100) einer dynamoelektrischen Maschine, aufweisend technische Keramik (101).

2. Inaktivteil (100) nach Anspruch 1, aufweisend SiC und/oder SiSiC.

3. Inaktivteil (100) nach einem der vorhergehenden Ansprüche, ausgebildet als Welle (21), Rotortragkonstruktion (23), Lagerschild (8, 81, 20, 22), Gehäuse (31), Kühlelement und/oder Abdeckung.

4. Inaktivteil (100) nach einem der vorhergehenden Ansprüche, ausgebildet als einteilige Einheit, umfassend wenigstens eine Welle (21) und eine Rotortragkonstruktion (23).

5. Inaktivteil (100) nach einem der vorhergehenden Ansprüche, ausgebildet als Gehäuse (31), wobei das Gehäuse Kühlkanäle (11) aufweist.

6. Verfahren zur Herstellung eines Inaktivteils (100) nach einem der Ansprüche 1 bis 5 mit folgenden Schritten:
- Herstellung eines Schlickers, aufweisend technische Keramik und eine Flüssigkeit,
- Einbringen des Schlickers in eine Gussform,
- Trocknen und/oder Aushärten,
- Sintern.

7. Verfahren nach Anspruch 6, wobei das Inaktivteil (100) nachbearbeitet wird.

8. Verwendung eines Inaktivteils (100) nach einem der Ansprüche 1 bis 5 bei der Produktion von Lebensmitteln.

9. Verwendung eines Inaktivteils (100) nach einem der Ansprüche 1 bis 5 auf See.

10. Verwendung eines Inaktivteils (100) nach einem der Ansprüche 1 bis 5 in bewegten Achsen.

11. Verwendung eines Inaktivteils (100) nach einem der Ansprüche 1 bis 5 in einem Wasserfahrzeug (200), Landfahrzeug (202, 203) und/oder Luftfahrzeug (201).
